(19)

**Europäisches Patentamt**

**European Patent Office**

**Office européen des brevets**

(11) **EP 3 163 788 B1**

(12) **EUROPEAN PATENT SPECIFICATION**

(45) Date of publication and mention
of the grant of the patent:
**19.06.2019 Bulletin 2019/25**

(21) Application number: **15815810.5**

(22) Date of filing: **18.05.2015**

(51) Int Cl.:
*H04L 7/00* (2006.01)     *G04G 5/00* (2013.01)

(86) International application number:
**PCT/JP2015/064128**

(87) International publication number:
**WO 2016/002367 (07.01.2016 Gazette 2016/01)**

(54) **COMMUNICATION SYSTEM, COMMUNICATION METHOD, AND COMMUNICATION PROGRAM**

KOMMUNIKATIONSSYSTEM, KOMMUNIKATIONSVERFAHREN UND KOMMUNIKATIONSPROGRAMM

SYSTÈME DE COMMUNICATION, PROCÉDÉ DE COMMUNICATION ET PROGRAMME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 JP 2014133498**

(43) Date of publication of application:
**03.05.2017 Bulletin 2017/18**

(73) Proprietor: **Hitachi, Ltd.**
**Chiyoda-ku**
**Tokyo 100-8280 (JP)**

(72) Inventors:
• **MARUYAMA, Tatsuya**
  **Tokyo 100-8280 (JP)**
• **YAMADA, Tsutomu**
  **Tokyo 100-8280 (JP)**

• **OOKURA, Yoshinori**
  **Tokyo 100-8280 (JP)**
• **KIDO, Mitsuyasu**
  **Tokyo 100-8280 (JP)**
• **YOSHIDA, Shoji**
  **Tokyo 100-8280 (JP)**
• **TAKAMI, Kazuhisa**
  **Tokyo 100-8280 (JP)**

(74) Representative: **Mewburn Ellis LLP**
**City Tower**
**40 Basinghall Street**
**London EC2V 5DE (GB)**

(56) References cited:
**EP-A2- 2 159 942     JP-A- 2009 077 311**
**JP-A- 2014 127 887**

EP 3 163 788 B1

**Description**

Technical Field

The present invention relates to a communication control system and the like.

Background Art

In some cases, in a control system that is configured in a distributed manner, it is required that, according to an application for realization, a point in time between terminals that are connected to each other is synchronized. In a distributed control system that is connected over a network, the point in time can be synchronized by transmission and reception of a point-in-time synchronization packet through the network.

For example, in a case where a signal, such as audio, or an image is transferred to a remote place, generally, an analog signal is digitized. In such a case, there is a scheme in which signal coding processing and decoding processing in the remote place are performed using a common frequency. In this scheme, a frequency that is used on the transmitting side and a frequency that is used on the receiving side need to be the same and to be stabilized. For this reason, a frequency synchronization and a point-in-time synchronization are necessary.

Furthermore, in a base station for wireless communication, if a frequency is stabilized between base stations, such as routers, and between a base station and a portable device, a system can be caused to perform handover smoothly. For this reason, synchronization between the base stations is required.

In addition, as applications of the point-in-time synchronization, fields, such as a measuring instrument and a gage, or fields, such as an industrial manufacturing apparatus, a protection control apparatus for an electric power system, and an intelligent electronic device (IED) are given.

As point-in-time synchronization schemes that use a network, Network Time Protocol (NTP), a Simple Network Time Protocol (SNTP), IEEE 1588 (NPL 1), and the like are given.

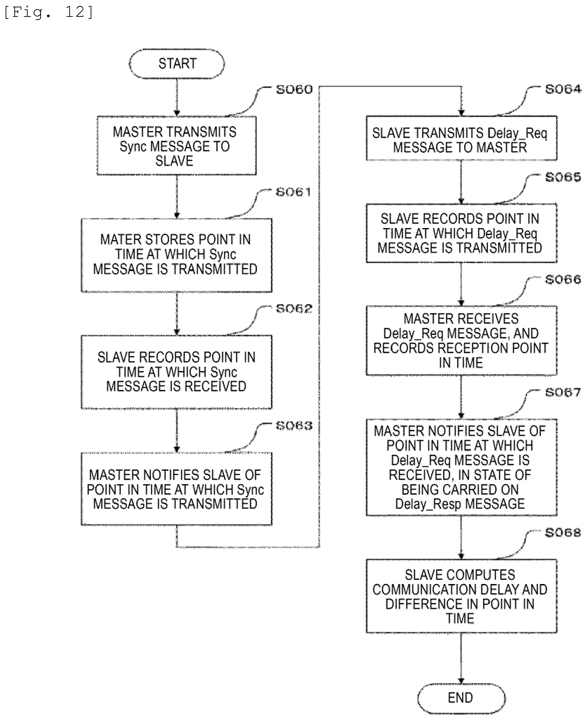

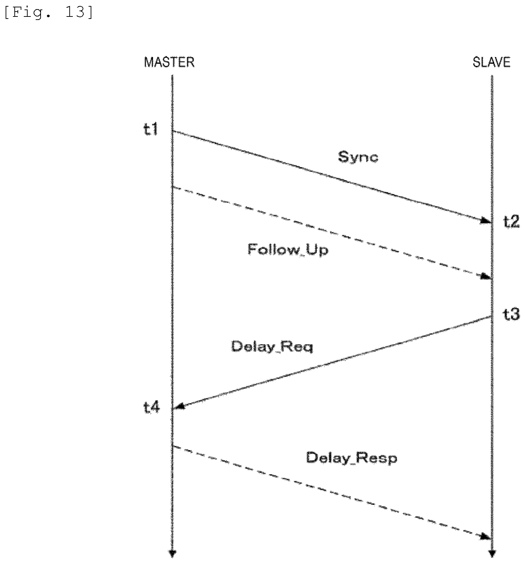

Fig. 12 illustrates a procedure for executing a point-in-time synchronization protocol in compliance with IEEE 1588. Fig. 13 illustrates exchange of a message in compliance with IEEE 1588.

IEEE 1588 has a master-slave configuration.

First, a master transmits a Sync message to a slave (S060). At this time, the master records a point in time t1 at which the Sync message is transmitted (S061). When receiving the Sync message, the slave records a point in time t2 at which the Sync message is received (S062). The master notifies the slave of t1 using any one of the following means (S063).

One is a method in which t1 information is carried on the Sync message. The other means is a method in which the t1 information is carried on a Follow_Up message subsequent to the Sync message.

Subsequently, the slave transmits a Delay_Req message to the master (S064). At this time, the slave records a point in time t3 at which the Delay_Req message is transmitted (S065). When receiving the Delay_Req message, the master records a point in time t4 at which the Delay_Req message is received (S066). Then, the master causes t4 information to be carried on the Delay_Resp message, and notifies the slave of t4 (S067).

The slave that receives the Delay_Resp message computes a communication delay between the master and the slave, and a difference in point in time, from t1, t2, t3, and t4 (S068) .

The computation of the communication delay assumes that the communication delays between the master and the slave in going and returning paths are equal to each other. Therefore, computation of a communication delay td on one of the going and returning paths is performed as expressed by the following equation.

$$td = ((t4 - t3) + (t2 - t1))/2 \qquad (Equation\ 1)$$

Furthermore, a difference tdiff in point in time between the master and the slave is expressed by the following equation.

$$tdiff = \{(t4 - t3) - (t2 - t1)\}/2 \qquad (Equation\ 2)$$

That is, if synchronization is performed at a point in time between the master and the slave, it follows that (t4 - t3) - (t2 - t1) = 0, and the slave computes tdiff, and synchronizes the point in time along with the master in such a manner that tdiff is 0. Moreover, in the following description, a packet that is necessary when synchronization processing is performed on a Sync message, a Follow_Up message, a Delay_Req message, a Delay_Resp message, and the like is referred to as a synchronization packet. Furthermore, in PTL 1, it is disclosed that, in a relay device that is provided between the master and the slave, a counter value is assigned to the synchronization packet that is received in an input port, a difference between a counter and a counter value that is assigned to the packet is computed when outputting from an output port is performed, a result of the computation is assigned to the packet, and thus a delay within the delay device is acquired.

Citation List

Patent Literature

PTL 1: JP-A-2010-62729 (EP 2 159 942 A2)

Non-patent Literature

NPL 1: IEEE 1588-2008 "IEEE Standard for a Precision Clock Synchronization Protocol for Networked Measurement and Control Systems"

Summary of Invention

Technical Problem

However, in the synchronization method described above, in a case where a network is configured using a relay device, such as a network switch, there is a problem in that the synchronization precision decreases.
For example, in IEEE 1588, it is assumed that, in a case where delays that result when the synchronization packet goes and returns are equal to each other, or there is a time difference between the delays that result when the synchronization packet goes and returns, the time difference is already known. However, in a case where a network is shared among multiple connection terminals, there is a problem in that a point-in-time synchronization packet is queued within the relay device, such as the network switch, and fluctuation in a delay difference that results when the synchronization packet goes and returns occurs.
Particularly, in a case where a wide area network or a public network, such as the Internet, is used, it is more difficult to cope with this problem. Effective measures to cope with the problem are an end-to-end Transparent Clock (TC), and a peer-to-peer Transparent Clock (TC), which are disclosed in NPL 1. A transfer delay of a packet within a network relay device can be measured using these mechanisms. By causing the measured transfer delay to be reflected in a data within the packet, a point-in-time synchronization supporting device of a terminal can calculate a difference between the communication delays that results when the synchronization packet goes and returns.
However, there is a problem in that the end-to-end TC and the peer-to-peer TC needs a dedicated function of acquiring a time stamp with high precision and updating synchronization packet information.
Furthermore, in a method that is disclosed in PTL 1, in a case where the number of stages of relay devices to go through is great, every relay device needs to have a function of computing the delay.
Then, an object of the present invention is to reduce an influence due to fluctuation in a delay of a synchronization packet using a simple configuration in a case where a network is configured using a relay device.

Solution to Problem

According to the present invention, which was made in view of the problems described above, there is provided a communication method that is performed by multiple communication control devices that are provided between communication devices that perform point-in-time synchronization using a synchronization packet, the method including: processing in which a first communication control device assigns a first point-in-time information relating to a point in time at which the synchronization packet that is sent from one of the communication devices is received, or a point in time at which the received synchronization packet is transmitted to a relay device, to a packet that is transmitted to the relay device; processing in which, for the synchronization packet, the second communication control device obtains information relating to a communication delay between the first and second communication control devices from second point-in-time information relating to a point in time at which the synchronization packet that is sent from the first communication control device through the relay device is received, or a point in time at which the received synchronization packet is transmitted to the other communication device, and from the first point-in-time information that is assigned by the first communication control device; and processing in which the obtained information relating to the communication delay is assigned to a packet that is transmitted to the other communication device.

Advantageous Effects of Invention

According to the present invention, in a case where a network is configured using a relay device, an influence due to fluctuation in a delay of a synchronization packet can be reduced using a simple configuration.

Brief Description of Drawings

Fig. 1 is a configuration diagram illustrating a system according to an embodiment of the present invention.
Fig. 2 is a hardware configuration diagram according to the embodiment of the present invention.
Fig. 3 is a functional configuration diagram according to the embodiment of the present invention.
Fig. 4 is a diagram illustrating an execution procedure according to the embodiment of the present invention.
Fig. 5 is a diagram illustrating the execution procedure according to the embodiment of the present invention.
Fig. 6 is a diagram illustrating a method of attaching transmission point-in-time information to a synchronization packet according to the embodiment of the present invention.
Fig. 7 is a diagram illustrating a packet format in compliance with IEEE 1588.
Fig. 8 is a diagram illustrating a method of updating a communication delay according to the embodiment of the present invention.
Fig. 9 is a diagram illustrating the method of updating the communication delay according to the embodiment of the present invention.
Fig. 10 is a diagram illustrating a determination procedure according to the embodiment of the present invention.
Fig. 11 is a configuration diagram illustrating the system according to an embodiment of the present invention.
Fig. 12 is a diagram illustrating the execution procedure according to the embodiment of the present invention.
Fig. 13 is a diagram illustrating a point-in-time synchronization message according to the embodiment of the present invention.
Fig. 14 is a functional configuration diagram according to the embodiment of the present invention.
Fig. 15 is a functional configuration diagram according to the embodiment of the present invention.
Fig. 16 is a configuration diagram illustrating the system according to an embodiment of the present invention.
Fig. 17 is a configuration diagram illustrating the system according to an embodiment of the present invention.
Fig. 18 is a diagram illustrating the point-in-time synchronization message according to the embodiment of the present invention.

Description of Embodiments

First Embodiment

(# Example of a System)

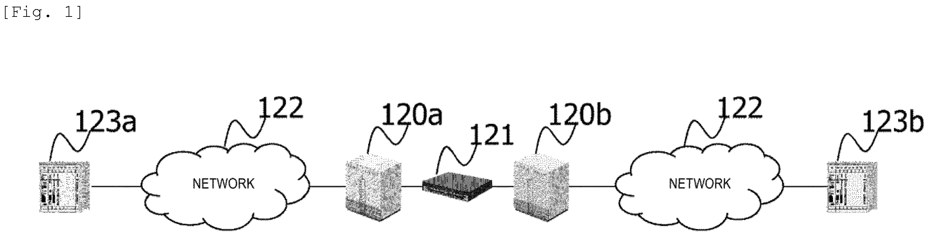

Fig. 1 is an example of a system that is configured with a communication control device 120 to which the present invention applies. For communication, a communication device 123 make a connection to a different communication device 123 through the communication control device 120, a network relay device 121, and a network 122.
As the network relay devices 121, a network switch, a router, a gateway, an OpenFlow switch in OpenFlow, and the like are given.
As examples of the networks 122, IEEE 802.3, various industrial network, IEC 61784, IEC 61158, and the like are given.

(# Hardware Configuration)

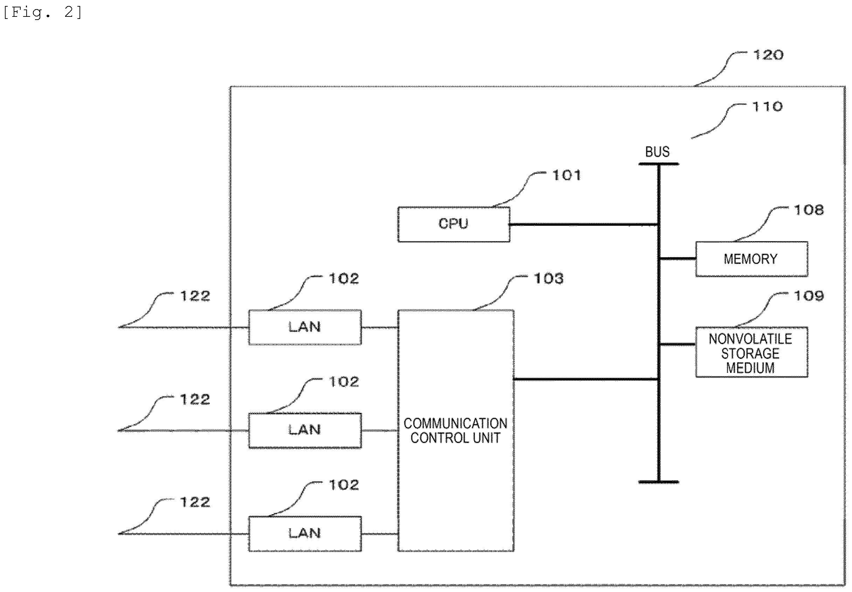

Fig. 2 is a hardware configuration of the communication control device 120 to which the present invention applies.
The CPU 101 transmits a program from a nonvolatile storage medium 109 to a memory 108 for execution. As an example of a processing program for execution, an operating system (hereafter referred to as an OS) or an application program that runs on the OS is given.
A LAN 102 is a transceiver IC into which a function of communicating with the network 122 is mounted. The LAN 102 receives a communication request from the program that runs on the CPU 101, and communicates with the network 122. As examples into which the LAN 102 is mounted, a Media Access Control (MAC) chip and a PHY (a physical layer) chip that are in compliance with IEEE 802.3 specifications, a chip that results from combing the MAC and PHY, and ICs, such as a FPGA, a CPLD, an ASIC, and a gate array, are given. Moreover, the LAN 102 may be included in the CPU 101 or a chipset that controls an information path within a computer. Moreover, the number of LANs 102 may be 1 and may be 2 or greater.

A communication control unit 103 makes a connection to one or more LANs 102 and a bus 110, and performs communication control processing. The communication control processing will be described in detail below. The communication control unit 103 may make a connection to the bus 110, and may make a connection to the LAN 102 through the bus 110. An example of the communication control unit 103 that is mounted into the IC, such the FPGA, the CPLD, the ASIC, or the gate array is given. Moreover, the communication control unit 103 may be included in the CPU 101 or the chipset that controls the information path within the computer. Furthermore, with the configuration of the LAN 102, a function necessary for communication may be built. For example, an example in which, if the LAN 102 is a function equivalent to the PHY (the physical layer), the communication control unit 103 includes a function equivalent to a MAC layer is given.

The memory 108 is a temporary storage area for operation of the CPU 101. The OS, the application programs, and the like that are transferred from the nonvolatile storage medium 109 are stored in the memory 108.

The nonvolatile storage medium 109 is an information storage medium, and is used for retention of the OS, an application, a device driver, or a program for operating the CPU 101, or for retention of a result of executing the program. As examples of the nonvolatile storage medium 109, a hard disk drive (HDD), a solid state drive (SSD), and a flash memory are given. Furthermore, as examples of an external storage medium that is easy to remove, a floppy disk (FD), a CD, a DVD, Blu-ray (a registered trademark), a USB memory, and CompactFlash, and the like are given for use.

The bus 110 is connected to each of the CPU 101, the LAN 102, the memory 108, and the nonvolatile storage medium 109. Examples of the bus 110, a PCI bus, an ISA bus, a PCI Express Bus, a system bus, and a memory bus are given.

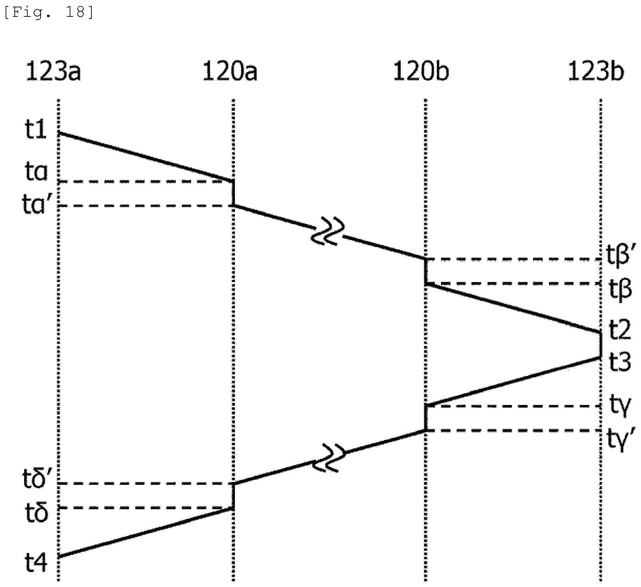

Fig. 18 is a conceptual diagram for compensating for an influence due to fluctuation in a communication delay according to the present embodiment. As examples, a Sync message and a Delay_Req message, among synchronization packets that are stipulated in IEEE 1588, which are illustrated in Fig. 13, are described with reference to Fig. 18.

As illustrated in Fig. 18, the Sync message that is transmitted by a communication device 123a at a point in time t1 is received by a communication device 123b at a point in time t2, and Delay_Req message that is transmitted by the communication device 123b a point in time t3 is received by the communication device 123a at a point in time t4. Moreover, in the present example, the communication device 123a is defined as a master, and the communication device 123b is defined as a slave.

At this point, synchronization processing in compliance with IEEE 1588 assumes that the communication delays between the master and the slave on going and returning paths are equal to each other, and if the communication device 123a and the communication device 123b are synchronized to each other, it follows that $(t2 - t1) = (t4 - t3)$.

However, in a case where, according to the present embodiment, the network is configured through the network relay device 121, particularly, there is a likelihood that the fluctuation will occur during the time when a synchronization packet stays at a relay device. When the fluctuation occurs during the staying time, it follows that $(t\beta - t\alpha) \neq (t\delta - t\gamma)$, a delay time $(t2 - t1)$ in the going path and a delay time $(t4 - t3)$ in the returning path are not equal to each other, precise synchronization processing cannot be performed.

Accordingly, according to the present embodiment, a communication control device 120a and a communication control device 120b are provided in such a manner that the network relay device 121 is interposed therebetween. Then, in the communication control device 120a, a point in time $t\alpha$ at which the Sync message is received is observed, and the observed point in time $t\alpha$ is subtracted from t1. In the communication control device 120b, a point in time $t\beta$ at which the Sync message is transmitted is observed, $t\beta$ is added to t1 from which the point in time $t\alpha$ is subtracted by the communication device 120a, and a result of the addition is transmitted to the communication device 123b. When this is done, an apparent transmission point in time t1', that is acquired by the communication device 123b is expressed as (Equation 3) and an apparent communication delay time td' is expressed as (Equation 4).

$$t1' = t1 - t\alpha + t\beta \qquad (\text{Equation 3})$$

$$td' = (t2 - t1') = (t2 - t\beta) + (t\alpha - t1) \qquad (\text{Equation 4})$$

In this manner, because $(t\alpha - t1)$ and $(t2 - t\beta)$ are a delay time from the communication device 123a to the communication control device 120a and a delay time from the communication control device 120b to the communication device 123b, respectively, a delay time from the communication control device 120a to the communication control device 120b, during which there is a likelihood that the fluctuation will occur, can be excluded.

Furthermore, also in the case of Delay_Req message, in the same manner, a point in time $t\gamma$ at which the Delay_Req message is received is observed, and, in the communication control device 120a, a point in time $t\delta$ at which the Delay_Req message is transmitted is observed. With regard to the reception point in time $t\gamma$ and the transmission point in time $t\delta$, which are observed, when a Delay_Resp message (which is not illustrated in Fig. 18) that is transmitted from the communication device 123a is transferred by each of the communication control device 120a and the communication control device 120b, $t\delta$ is subtracted from the point in time t4, and $t\gamma$ is added to a result of the subtraction.

When this is done, an apparent reception point in time t4', that is acquired by the communication device 123b is expressed as (Equation 5) and an apparent communication delay time td' is expressed as (Equation 6).

$$t4' = t4 - t\delta + t\gamma \qquad \text{(Equation 5)}$$

$$td' = t(t4' - t3) = (t\gamma - t3) + (t4 - t\delta) \qquad \text{(Equation 6)}$$

Therefore, in the same manner as in the Sync message, because $(t\gamma - t3)$ and $(t4 - t\delta)$ are a delay time from the communication device 123b to the communication control device 120b and a delay time from the communication control device 120a to the communication device 123a, respectively, a delay time from the communication control device 120b to the communication control device 120a, during which there is a likelihood that the fluctuation will occur, can be excluded.

In this manner, by providing the communication control device 120a and the communication control device 120b in such a manner that the network relay device 121 is interposed therebetween, the fluctuation in the delay time due to the network relay device 121 can be cancelled. Furthermore, in the present example, the description is provided using the example in which the communication control device 120 observes the points in time $t\alpha$, $t\beta$, $t\gamma$, and $t\delta$, but, if delay times ($t\alpha' - t\alpha$, $t\beta' - t\beta$, $t\gamma' - t\gamma$, and $t\delta' - t\delta$) due to transfer processing within the communication control device 120 are constant, the same processing is performed by measuring $t\alpha'$, $t\beta'$, $t\gamma'$, and $t\delta'$ instead of $t\alpha$, $t\beta$, $t\gamma$, and $t\delta$. Thus, the fluctuation in the delay time can be cancelled.

Next, a specific communication control device 120 is described.

Moreover, in the following example, a description is provided using an example in which the communication control device 120a uses the point in time $t\alpha'$ at which the synchronization packet is transmitted and the communication control device 120b uses the point in time $t\beta'$ at which the synchronization packet is received.

(Description of Each Functional Unit)

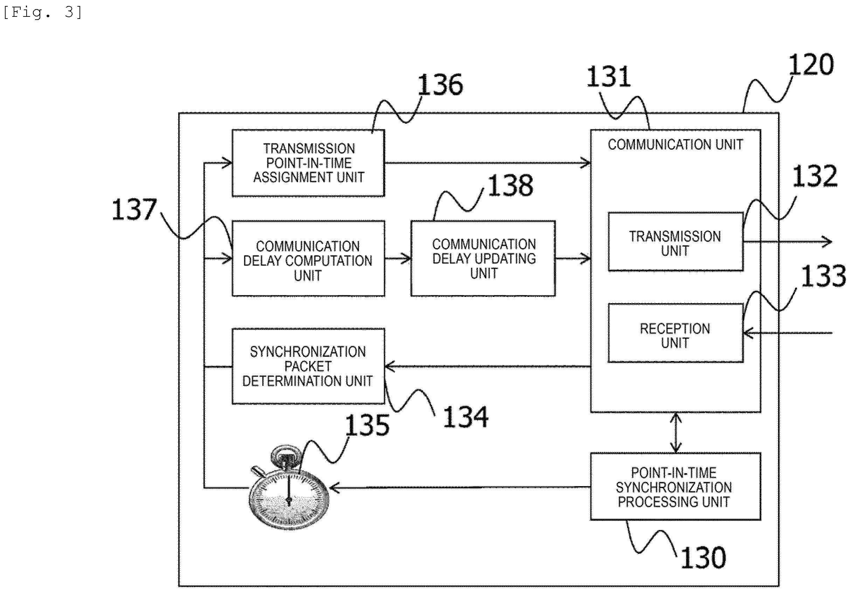

Fig. 3 illustrates a functional configuration diagram illustrating the communication control device 120a to which the present invention applies.

A point-in-time synchronization processing unit 130 is a functional unit that executes a point-in-time synchronization procedure. A point-in-time synchronization protocol is executed, and a time tracking unit 135 is synchronized to a time tracking unit 135 of a different communication device 123. As the point-in-time synchronization protocols, IEEE 1588, an NTP, and an SNTP are given. The point-in-time synchronization processing unit 130 may be realized with software on the CPU 101, and may be realized as hardware logic in a case where the LAN 102 is configured with the FPGA or the CPLD. Alternatively, the point-in-time synchronization processing unit 130 may be configured with both of the software on the CPU 101 and the LAN 102. In this case, an example in which a function of measuring a packet transmission timing and a packet reception timing or processing that generates a packet format is performed in the LAN 102 is given. The point-in-time synchronization processing unit 130 may be synchronized to a communication control device 121b through the network relay device 121.

A communication unit 131 has a function of transmitting and receiving a prescribed packet in the point-in-time synchronization protocol.

A transmission unit 132 has a function of transmitting a prescribed packet in the point-in-time synchronization protocol, and transmits a packet to a different device that makes a connection through a network.

A reception unit 133 has a function of transmitting a prescribed packet in the point-in-time synchronization protocol, and receives a packet from a different device that makes a connection through the network.

Example in which the communication unit 131, the transmission unit 132, the reception unit 133 are realized by the LAN 102 are given. Moreover, in order to configure a network as illustrated in Fig. 1, the communication control device 120 actually needs two ports, but descriptions are provided with an illustration of one port being omitted in an example in Fig. 3.

A synchronization packet determination unit 134 determines whether or not a packet that is transferred for the CPU 101, the communication control unit 103, or a different LAN 102 is a packet that is based on the point-in-time synchronization protocol. In the communication control device 120a, when it comes to a point-in-time synchronization packet, in a case where the packet is received from the communication device 123a side, the packet is transferred to a transmission point-in-time assignment unit 136, and in a case where the packet is received from the relay device 121 side, the packet is transferred to a communication delay computation unit 137. The synchronization packet determination unit 134 is realized by any one or more of the software on the CPU 101, the LAN 102, and the communication control unit 103.

The time tracking unit 135 provides point-in-time information (a connection to a different function unit is not illustrated). The time tracking unit 135 may be configured with an oscillator, a real time clock (RTC), or an IC for clocks, and may be configured with software that runs on the CPU 101. In some cases, depending on an operating system, a software timer that acquires a point in time from the RTC at the time of activation and measures a time with a periodic timer interruption within the CPU 101 is configured. In the case of the software timer, because time resolution is poor compared with the time tracking unit 135 that uses software, there is a need to determine whether or not the software timer is employed, based on whether or not the software timer can provide the time synchronization precision that is required of the system.

Moreover, the point-in-time information that is provided by the time tracking unit 135 may be the common world standard time, and may be the time that is determined by the time tracking unit 135 itself. This serves a purpose of measuring the communication delay, and is because the time tracking is not necessarily performed based on the common world standard time.

A format in which the time tracking unit 135 expresses the point in time may be an arbitrary format. It is possible that the point in time is expressed with a prescribed number of bits or in prescribed time units. For example, it is also possible that according to the format that is stipulated in IEEE 1588, the point in time is expressed in a total of 80 bits that is a sum of 48 bits for a second unit and 32 bits for a nanosecond unit.

The transmission point-in-time assignment unit 136 updates the synchronization packet with the point in time provided by the synchronized time tracking unit 135 as the transmission point in time (attaches or changes the point-in-time information). The transmission point-in-time assignment unit 136 expresses the transmission point in time with any one or more of the software on the CPU 101, the LAN 102, and the communication control unit 103.

The communication delay computation unit 137 acquires the point in time at which the synchronization packet that is transferred by the synchronization packet determination unit 134 is received, from the time tracking unit 135. Then, in the case of a communication delay computation unit 127 of the communication control device 120b, the point in time on the same packet, at which the communication control device 120a performs communication, is subtracted from the reception point in time, and the communication delay is obtained. The synchronization packet and the calculated communication delay are transferred to a communication delay updating unit 138.

The communication delay updating unit 138 causes the communication delay, which is notified by the communication delay computation unit 137, to be reflected in the synchronization packet that is transferred from the same communication delay computation unit 137 (attaches the communication delay to the synchronization packet, or changes the delay information).

At this point, in a case where the delay time of the synchronization packet needs to be compensated for only for communication in one direction (for example, packet communication in the direction from the communication device 123a to the communication device 123b), the communication control device 120a does not need functions of the communication delay computation unit 137 and the communication delay updating unit 138, and the communication control device 120b does not need a function of the transmission point-in-time assignment unit 136.

(Point-in-time Synchronization Procedure between Communication Devices)

The point-in-time synchronization procedure between communication devices is described using the communication devices 123a and 123b that are illustrated in Fig. 1, as examples. The following two procedures are defined as the point-in-time synchronization procedures.

1. Synchronization between the Communication Control Devices 120a and 120b
2. Synchronization between the Communication Devices 123a and 123b

The procedures described above may be sequentially executed, and may be independently executed.

First, synchronization processing between the communication control devices 120a and 120b is described. Synchronization between the communication control devices 120a and 120b is performed by the point-in-time synchronization processing unit 130 of each communication control device. As examples of the point-in-time synchronization procedure that is executed by the point-in-time synchronization processing unit 130, a method of performing point-in-time synchronization while monitoring packet reception intervals as disclosed for example in JP-A-2014-78781, a method of performing synchronization using global positioning system (GPS) in each of the communication control devices 120a and 120b, and a method of performing synchronization over a directly-connected line without going through the network relay device 121 are given.

The synchronization processing that uses these methods may be performed at every fixed time, or may be performed according to a communication load state. For example, if communication load is low, it is difficult for packet contention within the network relay device 121 to occur, and it is easy to perform synchronization. Alternatively, an example in which, if it is already known that load on an entire network increases over a prescribed period of time (for example, collection of information from a sensor terminal device), synchronization is performed immediately before the increase in the load is given. Alternatively, an example in which, before the communication devices 123a and 123b transmit the synchronization packet, the communication control devices 120a and 120b are requested to perform the synchronization processing is given.

The communication control device 120 may determine a master (a point-in-time synchronization destination) and a slave (a device that performs the point-in-time synchronization) using an arbitrary method in the synchronization processing between the communication control devices 120a and 120b. For example, a Best Master Clock (BMC) algorithm that is stipulated in IEEE 1588 is given as an example.

Next, a procedure in which the communication devices 123a and 123b are synchronized to each other is described with reference to Figs. 13, 4 and 5. At this point, the description is provided with the synchronization procedure in compliance with IEEE 1588 as an example, but a different point-in-time synchronization protocol is also applicable.

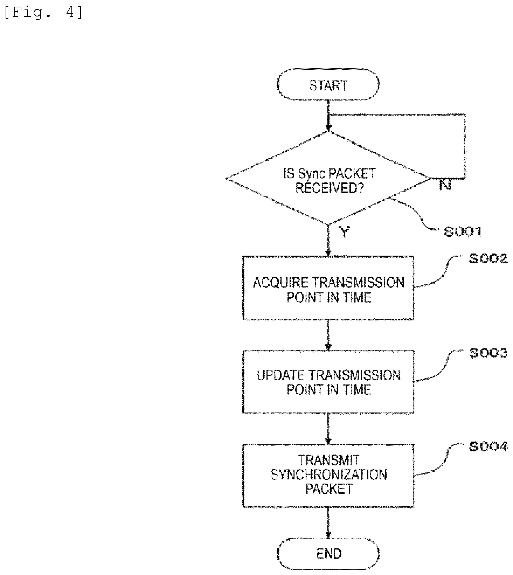

Fig. 4 is a processing block diagram illustrating the communication control device 120a. First, the synchronization packet waits to be received (S001). The synchronization packet (for example, the Sync message) is determined by the synchronization packet determination unit 134. When the synchronization packet is received, the point in time that is provided by the time tracking unit 135, to which the point-in-time synchronization processing unit 130 is synchronized, is acquired as the transmission point in time (S002). The acquired transmission point in time is reflected in the synchronization packet (S003). In order to prevent a decrease in synchronization precision with the passage of time, it is desirable that S003 is performed immediately after S002.

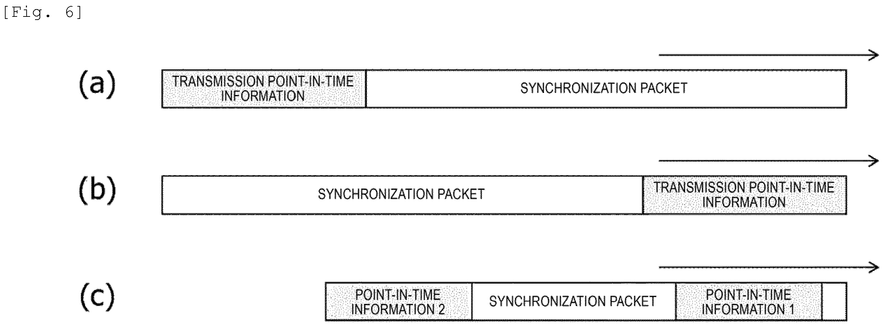

At this time, an example of a method of updating the point in time at which the synchronization packet is transmitted, a method that is illustrated in Fig. 6 is given.

Fig. 6 is a diagram illustrating an example of a method in which the transmission point in time is updated by the communication control device 120a. Fig. 6(a) illustrates a method of attaching transmission point-in-time information to the end of a packet. Fig. 6(b) illustrates a method of attaching the transmission point-in-time information to the head of the packet. Fig. 6(c) illustrates a method of causing the transmission point-in-time information to be reflected in the synchronization packet.

Each of the update method is described.

In Fig. 6(a), if the synchronization packet has a prescribed size, or the length of an entire packet can be acquired from a prescribed area of the packet, the communication device 123 that receives the synchronization packet can acquire the point-in-time information that is attached to the end of the packet.

For example, if the packet is a packet in compliance with IEEE 1588 that uses an IEEE 802.3 format, because the size of a common header is 34 bytes and a transmission time stamp is 10 bytes, the transmission point in time information is stored in 45-th and later bytes immediately after the header in compliance with IEEE 802.3.

Moreover, an example in which a format of the transmission point-in-time information is based on a point-in-time expressing format of the time tracking unit 135 is given, and an example of an application of a point-in-time expression format (80 bits) in compliance with IEEE 1588 is given. Alternatively, the format may be an arbitrary format, and may be a tag length value (TLV) format that is usable for a unique parameter definition which is stipulated in IEEE 1588.

In Fig. 6(b), because the point-in-time information is assigned to the head of the head, the communication device 123 that receives the synchronization packet cannot receive the entire packet, and can compute the communication delay. However, because the point-in-time information is positioned before the header, it is difficult for the network relay device 121 to control a path for the packet based on header information. Therefore, the method of updating the synchronization packet that is illustrated in Fig. 6(b) is limited to a case where the network relay device 121 is able to control the path without depending on the header information. For example, in some cases, a combination of an input port and an output port of the network relay device 121 is uniquely determined, and so forth.

Moreover, the transmission point-in-time information occupies a position between Fig. 6(a) and 6(b), and may be an arbitrary position in the packet. In such a case, an example in which the transmission point-in-time information is inserted in a header area or a data area of a prescribed protocol is given.

In Fig. 6(c), the transmission point-in-time information is subtracted from the transmission time stamp that is attached to the synchronization packet. That is, the point-in-time information that is attached by the communication device 123a is stored in point-in-time information 2, and the communication control device 120a subtracts the transmission point-in-time information from the point-in-time information 2. By doing this, in the communication control device 120b, the reception point in time is added, and thus the communication delay can be obtained. Furthermore, point-in-time information 1 that is an area in which the communication delay time is stored is provided in the synchronization packet, and thus the same effect can be obtained.

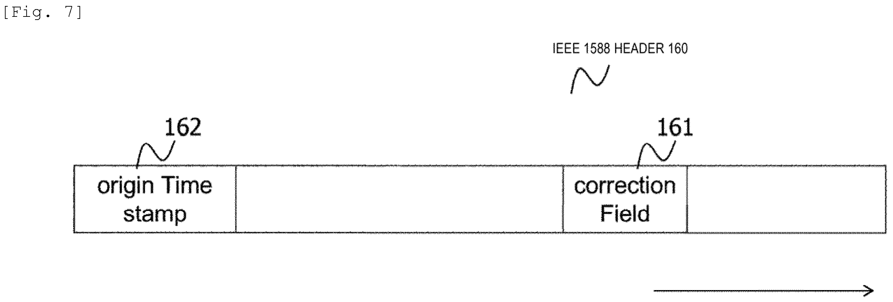

Fig. 7 is a diagram illustrating a simplified header format in compliance with IEEE 1588.

If IEEE 1588 is given as an example, as illustrated in Fig. 7, an example is given in which one or both of a correction Field 161 that is an area of a header 160, in which the communication delay time is stored, and an origin Time stamp 162 that is an area in which the time stamp is stored by a transmission source of the synchronization packet are used. At this point, the correction Field 161 is used, by the communication device 123b on the slave side, for compensating for the delay time, and the communication device 123b subtracts a point in time that is stored in the correction Field 161, from the origin Time stamp 162, and uses a result of the subtraction for a synchronization arithmetic operation.

With reference again to Fig. 4, after the transmission point-in-time information is reflected in the synchronization packet in S003, the synchronization packet is transmitted (S004).

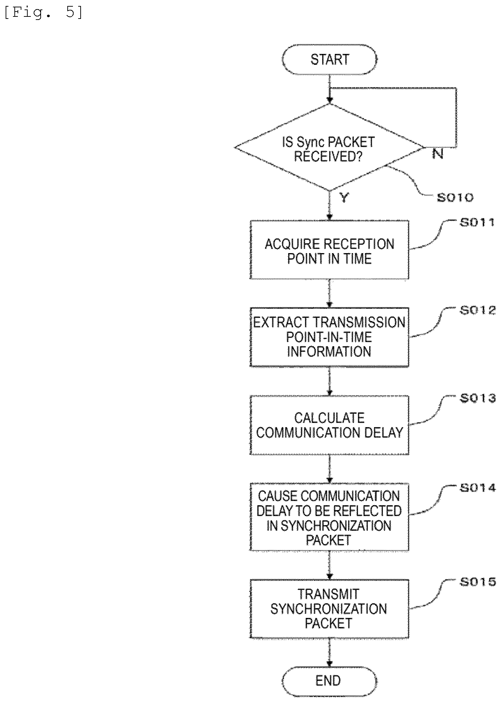

Fig. 5 is a diagram illustrating a procedure that is executed by the communication control device 120b. First, a Sync packet waits to be received (S010). Next, reception point in time is acquired from the time tracking unit 135 (S011). Next, the transmission point-in-time information that is caused by the communication control device 120a to be reflected is acquired from the synchronization packet (S012). Moreover, in a case where a method in which the communication control device 120a causes the transmission point-in-time information to be reflected is one in Fig. 6(c), the transmission point-in-time information does not need to be extracted, and what is necessary is just to add the reception point in time.

In order for the communication control device 120b to acquire the transmission point-in-time information, an attachment position of the transmission point-in-time information needs to be shared in advance between both of the communication control devices 120a and 120b. For this purpose, the attachment position of the transmission point-in-time information may be configured beforehand for the communication control devices 120a and b, and may be in advance fixed using a prescribed method. Alternatively, a position of the transmission point-in-time information may be notified with an arbitrary protocol. At least information indicating the position of the transmission point-in-time information is stored in a notification of the position of the transmission point-in-time information. In addition, information indicating the presence of the notification of the position of the transmission point-in-time information, an expression format (unit, size, or the like of time) of the transmission point-in-time, and information (information of the time tracking unit 135, such as a network address or the time precision) relating to the communication control device 120a that attaches the transmission point-in-time information may be stored. The communication control device 120 and the communication device 123 can use these pieces of information in order to perform processing that identifies a communication control device that realizes the present invention jointly or to determine the likelihood of realizing the target synchronization precision. The notification may be transmitted at prescribed timing or periodically by the communication control device 120a, and the communication control device 120b may notify the communication control device 120a of a transmission request.

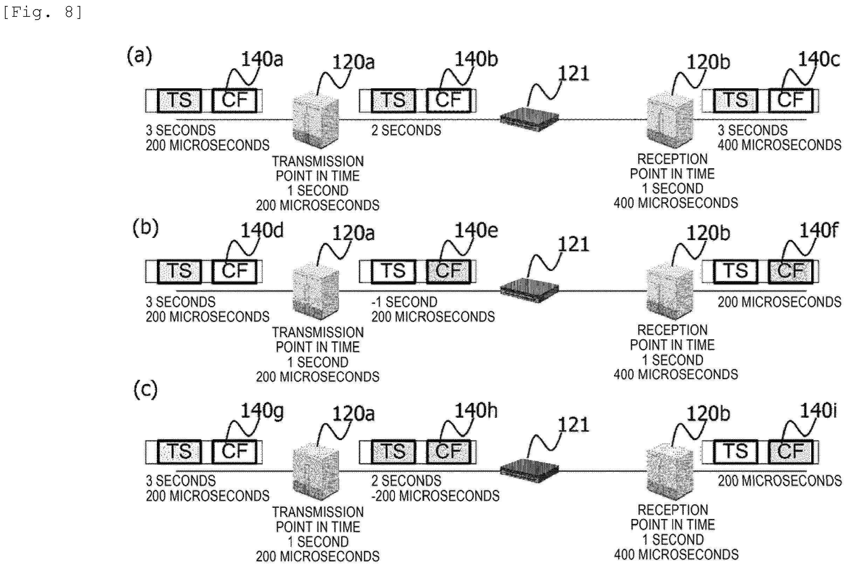

Alternatively, the position of the transmission point-in-time information may be determined from information in the synchronization packet. For example, in the case of the attachment to the end that is illustrated in Fig. 8(a), it can be determined that the transmission point-in-time information is present after as many bits as a prescribed size of the synchronization packet that is stipulated with the protocol. Additionally, in a case where the TLV format is used, the position of the transmission point-in-time information can be determined with a value of a tag of the transmission point-in-time information that is determined beforehand. Alternatively, the position of the transmission point-in-time information may be indicated using a prescribed area of the protocol.

In the case of a method that is illustrated in Fig. 6(c), the position of the transmission point-in-time information does not need to be identified. However, it may be indicated whether or not the method that is illustrated in Fig. 6(c) applies. For this purpose, configuration for the communication control devices 120a and 120b may be performed in advance, and the method in Fig. 6(c) may be determined in advance as being dedicated to configuration of the communication control device 120a. Alternatively, with an arbitrary protocol, the use of the method in Fig. 6(c) may be notified. Alternatively, the use of the method in Fig. 6(c) may be indicated by the information in the synchronization packet. For example, the TLV format may be used, and an example in which a not-in-use area or a reserved area of a protocol header is used is given. If the area is an area that is not processed by the network relay device 121, when the communication control device 120b performs transmission, by amending such an area, the use of the not-in-use area or the reserved area can also be prevented from having an influence on the outside.

When the transmission point-in-time information is extracted in S012, the extracted transmission point-in-time information is combined with the reception point in time that is acquired in S011, and the communication delay is calculated (S013).

For calculation of a communication delay d, computation is performed using the following equation where the transmission point-in-time information is Ts and reception point-in-time information is Tr.

$$d = Tr - Ts \quad \text{(Equation 7)}$$

Moreover, the calculation of the communication delay in S013 is unnecessary in the method in Fig. 6(c).

When the communication delay is calculated in S013, the communication delay is reflected in the synchronization packet (S014). In a case where the methods in Fig. 6(a) and 6(b) are used, the communication control device 120b removes the transmission point-in-time information that is attached to the synchronization packet, and adds the calculated communication delay d to an origin time stamp or stores the communication delay d within the synchronization packet. For example, in the case of IEEE 1588, the communication delay d is added to the origin Time stamp 162, or the communication delay d is added to the correction Field 161.

Moreover, in the method in Fig. 6(c), a reception point in time Tr is added. In the communication control device 120b, the reception point in time Tr is added, and in the communication control device 120a, a transmission point in time Ts is subtracted. Thus, as a result, the communication delay is reflected in the synchronization packet. At this time, the example is described in which, in order for the communication delay to be reflected in the synchronization packet, the origin Time stamp 162 is used, but it is desirable that, as a result of reflecting the communication delay, the origin Time stamp 162 before being received in the communication control device 120a is not changed.

Fig. 8 illustrates a method of calculating the communication delay in a case where Fig. 6(c) is used.

Fig. 8 is a diagram illustrating an example of the method of calculating the communication delay in a case where the method that is illustrated in Fig. 6(c) is used. Moreover, in Fig. 8, the origin Time stamp 162 is expressed as TS, and the correction Field 161 is expressed as CF.

Fig. 8(a) illustrates a method of updating the transmission point-in-time information using on the origin Time stamp 162. In the method in Fig. 8(a), the origin Time stamp 162 changes before the communication control device 120a (3 seconds 200 microseconds of a packet 140a) and after communication control device 120b (3 seconds 400 microseconds of a packet 140c) . That is, in the communication control device 120a, the transmission point-in-time information is subtracted from a point in time of the origin Time stamp 162, and in the communication control device 120b, and the reception point in time is added to the origin Time stamp 162. Thus, the communication delay between the communication control device 120a and the communication control device 120b can be excluded. However, because synchronization computation in the communication device 123b uses the origin Time stamp 162 and the correction Field 1611, the synchronization is possible.

Fig. 8(b) illustrates a method of using only the correction Field 161. The origin Time stamp 162 does not change before the communication control device 120a and after the communication control device 120b. That is, in the communication control device 120a, the transmission point-in-time information is subtracted from a point in time of the correction Field 161, and in the communication control device 120b, and the reception point in time is added to the point in time of the correction Field 161. Thus, the communication delay between the communication control device 120a and the communication control device 120b can be excluded when the synchronization computation is performed in the communication device 123b. However, there is a need for a point-in-time format of the time tracking unit 135 of each of the communication control devices 120a and 120b to be consistent with the correction Field 161.

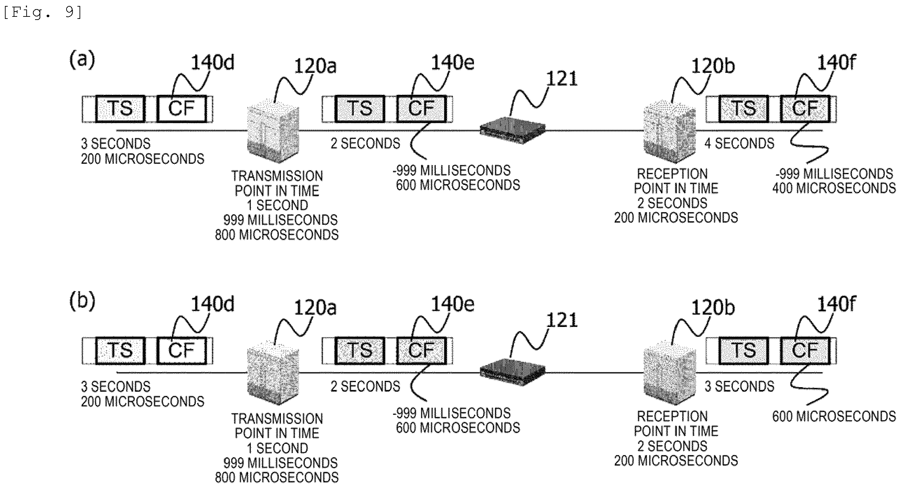

For example, because the bit width of the origin Time stamp 162 is broader than that of the correction Field 161, application of Fig. 9(b) is difficult in a case where a format of the origin Time stamp 162 is used in the time tracking unit 135.

Fig. 8(c) illustrates a case where both of the origin Time stamp 162 and the correction Field 161 are used. There is a method in which the point-in-time information is divided into a second unit and a less-than-second unit, and the second unit and the less-than-second unit are computed using the origin Time stamp 162 and the correction Field 161, respectively. That is, in the communication control device 120a, the second unit of the transmission point-in-time is subtracted from the origin Time stamp 162, and the less-than-second unit of the transmission point-in-time information is subtracted from the point in time of the correction Field 161. Then, in the communication control device 120b, the second unit of the reception point-in-time information is added to the origin Time stamp 162, and the less-than-second unit of the reception point-in-time information is added to the correction Field 161. By doing this, when the synchronization computation is performed in the communication device 123b, the communication delay between the communication control device 120a and the communication control device 120b can be excluded.

In the case of this method, in a case where a point in time between the communication control devices 120a and 120b is carried over in a second unit, there is a likelihood that the origin Time stamp 162 will change (Fig. 9(A)). In such a case, an example in which the transmission point-in-time information is carried in a packet and the carrying-over is determined is given. For example, an example in which, in a case where a less-than-second part of the transmission point-in-time information is more than h'20000000 (hexadecimal number. 536870912) nanoseconds, the not-in-use area or the reserved area (for example, the uppermost bit of the correction Field 161) is set to 1 is given.

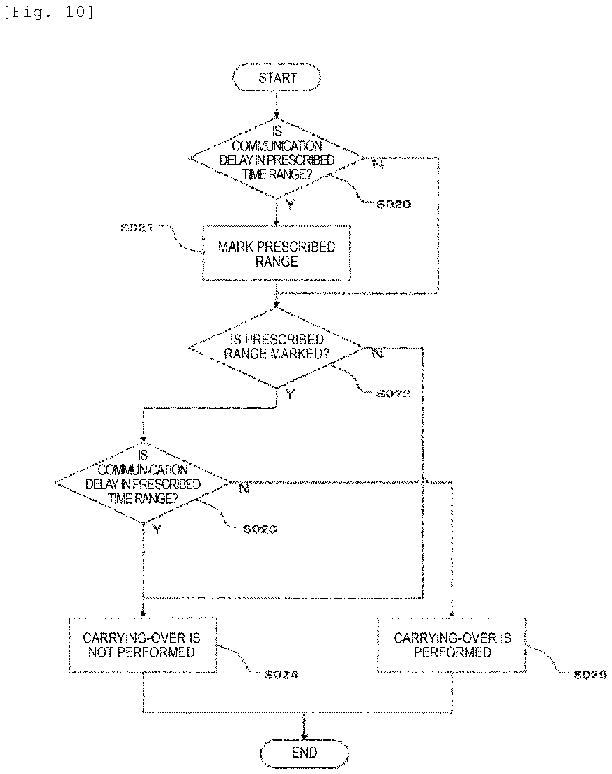

The communication control device 120b that receives the synchronization packet can determine whether or not the carrying-over is performed, by using the reception point-in-time information and the bit (Fig. 10). In a case where the carrying-over occurs, an addition value of the origin Time stamp 162 is decreased by 1, and a result of the decreasing is used for the computation of the correction Field 161 (Fig. 9(b)).

Fig. 10 is a processing flow illustrating processing by each of the communication control device 120a and the communication control device 120b, which determines whether or not the carrying-over is performed. The communication control device 120a determines whether or not the communication delay is in a prescribed range (S020). If the communication delay is in the prescribed range, a prescribed area of the synchronization packet is marked (S021). The communication control device 120b determines whether or not the prescribed area is marked (S022). If the prescribed area is marked, it is determined that the communication delay is in a prescribed time range (S023) . If it is determined that the communication delay is in the prescribed time range (S024), it is determined that the carrying-over is not performed, and if the communication delay is not in the prescribed time range, it is determined that the carrying-over is performed (S025).

However, this method assumes that the communication delay between the communication control devices 120a and 120b is approximately less than 500 milliseconds. Moreover, in a case where the worst value of the communication delay between the communication control devices 120a and 120b exceeds 500 milliseconds, what is necessary is just to change a prescribed range in S020 in Fig. 10. Alternatively, an example in which path control of the network relay device 121 is configured (a change in a priority level and so on) in such a manner that the worst value of the communication delay can be guaranteed is given.

Then, in S014 that is illustrated in Fig. 5, when the communication delay is reflected in the synchronization packet, the synchronization packet is transmitted (S015).

The communication device 123b that receives the synchronization packet computes a point-in-time error and the like using the correction Field 161 and the origin Time stamp 162 in the synchronization packet in compliance with IEEE 1588, and performs synchronization.

In the case of a peer delay scheme that is stipulated in IEEE 1588, the communication control device 120a does not need the functions of the communication delay computation unit 137 and the communication delay updating unit 138, and the communication control device 120b does not need the function of the transmission point-in-time assignment unit 136.

That is, in the peer delay scheme, the communication device and the relay device on a communication path measure the communication delay on a neighboring communication path and causes a result of the measurement to be reflected in a prescribed parameter of the synchronization packet. Because the communication device 123 can compute the point-in-time error using the communication delay information in the synchronization packet, the synchronization is possible only with a unidirectional synchronization packet (Sync).

On the other hand, in the case of a delay request-response scheme, the point-in-time error is computed using a bidirectional synchronization packet. For this reason, in a case where the present invention applies, the functions of the communication control device 120a, the communication control device 120b, the transmission point-in-time assignment unit 136, the communication delay computation unit 137, and the communication delay updating unit 138 are necessary. In the present scheme, the same procedure is executed not only on the Sync packet, but also on a Delay_Req packet. Accordingly, in a delay request-response scheme, the point-in-time synchronization can also be performed.

Application of the present invention will be described below with the above as a basic configuration.

In the method described above, the communication delay is computed based on the synchronized point in time, and a result of the computation is reflected in the synchronization packet. Aside from this, in a situation where the communication control devices 120a and 120b are not synchronized, the procedures in Figs. 4 and 5 may be executed, point-in-time errors of the communication control devices 120a and 120b may be calculated afterward, and may notify the communication device 123b of a result of the calculation. In this case, because the communication device 123b determines that a message which notifies the point-in-time error independently of the synchronization packet is transmitted, the configuration may be performed in advance, or may store information to that effect in the synchronization packet. Furthermore, a quantity relationship between the synchronization packet and the message that notifies the point-in-time error may not be on a one-to-one basis. This is because the point-in-time error of each of the communication control devices 120a and 120b, although it changes with the passage of time, is regarded as not changing for a prescribed period of time, according to the target synchronization target. Any one or both of the communication control devices 120a and b may be notified of a synchronization error. Information on a transmission destination of the message that notifies the point-in-time error can be acquired along with a destination address of the synchronization packet.

Furthermore, each of the communication control devices 120a and 120b may afterward notify the communication device 123b of the transmission point-in-time information on the communication control device 120a, the reception point-in-time information on the communication control device 120b, or the communication error that is computed in the communication control device 120b, as well as the synchronization error. In this case, the communication delay is not reflected in the synchronization packet itself. An example in which the communication delay is computed in the communication device 123b is given.

Furthermore, the number of network relay devices 121 between the communication control devices 120a and 120b in Fig. 1 is not limited to 1, and it may be possible to go through multiple network relay devices 121 or the network 122. Furthermore, multiple communication control devices 120a, the network relay device 121 (or the network 122), and the communication control device 120b may be present on a path between the communication devices 123a and 123b. Furthermore, in order to also cope with a case where the communication path is changed due to a Rapid Spanning Tree Protocol (RSTP) or the like, a configuration may be employed in which communication control devices 120 are arranged on multiple paths. The greater the number of units each of which is configured with the communication control device 120a, the network relay device 121, and the communication control device 120b, the higher the precision with which the communication devices 123a and 123b can be synchronized.

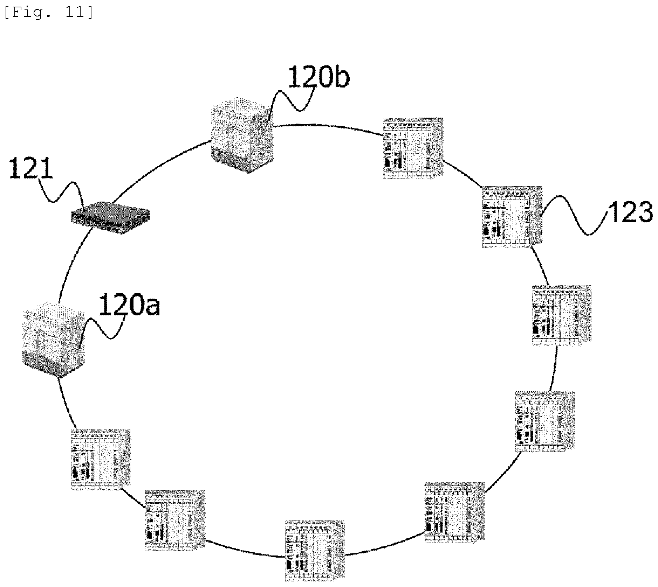

Alternatively, as illustrated in Fig. 11, application to a network in the shape of a ring may be possible. As examples of specifications of a ring network, IEC62439-3 (High availability Seamless Redundancy (HSR)), and Resilient Packet Ring (RPR) in compliance with IEEE 802.17 are given.

Furthermore, the number of communication ports of the communication control device 120 needs to be a minimum of 2, but although the number thereof is greater than 2, this does not pose any problem. If the number of communication ports is greater than 2, communication ports of multiple network relay devices 121, multiple network relay devices 121, or multiple communication devices 123, and the network 122 can be connected. If the number of communication ports is 2, one communication port can be connected to the network relay device 121 or the network 122, and the other communication port can be connected to the communication device 123 or the network 122 (the communication control devices 120a and 120b in Fig. 1) .

Furthermore, according to the present embodiment, the description is provided with IEEE 1588 as an example, but a different time-in-point protocol is also available. In the Network Time Protocol (NTP) or the Simple Network Time Protocol (SNTP), the communication delay and the transmission point-in-time information may be reflected in the point-in-time information in the synchronization packet, and the transmission point-in-time information, the reception point-in-time information, and the communication delay, which are measured, may be transmitted afterward to the communication device 123.

(Effects)

With the application of the invention, which is described above, also in a wide area network that uses the network relay device 121, by configuring the communication control device 120, a change delay in the network relay device 121 can be computed, and the communication device 123 can perform synchronization with high precision. Additionally, the multiple network relay devices 121 and the network 122 can be connected between the communication devices 123, and the number of communication control devices 120 can be optimized in accordance with the target synchronization precision. Therefore, the system can be established at low cost, compared with a case where the network relay devices 121 are all configured with dedicated relay devices in compliance with IEEE 1588.

More precisely, even in a case where multiple relay devices, in which the fluctuation in the communication delay is likely to occur, are present in the network, by establishing the network in such a manner that theses relay devices are interposed between the communication control devices 120, each relay device does not need to have a dedicated function, and the synchronization can be performed with high precision.

Furthermore, from the perspective of the communication device 123 outside of the communication control device 120, because the synchronization processing can be performed without configuring the synchronization packet or changing a processing procedure, it is possible that the system is configured with terminal devices that complies with standard specifications, such as IEEE 1588 and the NTP.

Second Embodiment

A second embodiment illustrates an example in which the communication delay is calculated within the communication device. Unless otherwise specified, a reference character that is used in the embodiment means that a function, an element, or the like is the same as that which is described in the first embodiment.

A hardware configuration of a communication control device 150 to which the present invention applies is as illustrated in Fig. 2.

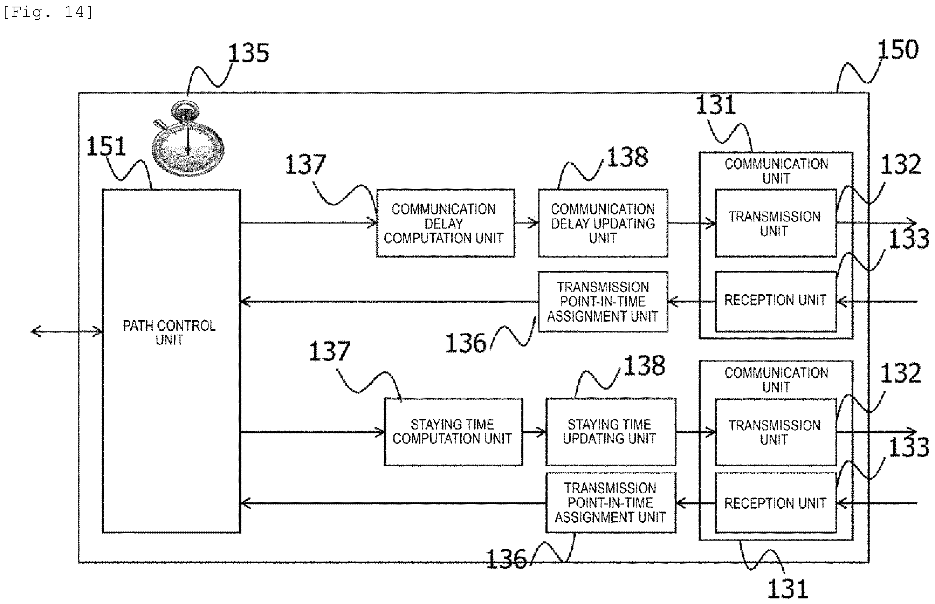

A functional configuration of the communication control device 150 is illustrated in Fig. 14. That is, this means that the transmission point in time that is assigned by the transmission point-in-time assignment unit 136 to the synchronization packet is the same as the reception point in time in the reception unit 133 in Fig. 14. A path control unit 151 controls a path for transferring a packet between paths that are connected. The path control unit 151 is equivalent to a function of a switching IC or the like.

The transmission point-in-time assignment unit 136 performs an operation in Fig. 4, and the communication delay computation unit 137 and the communication delay updating unit 138 perform an operation in Fig. 5, and thus a transfer delay within the communication control device 150 can be reflected in the synchronization packet.

Moreover, only two communication ports are illustrated in Fig. 14, but although the number of communication ports is 1 or is greater than 2, this does not pose any problem. In such a case, the reception unit 133 and the transmission point-in-time assignment unit 136 are connected to each other, and the transmission unit 132 and the communication delay updating unit 138 are connected to each other.

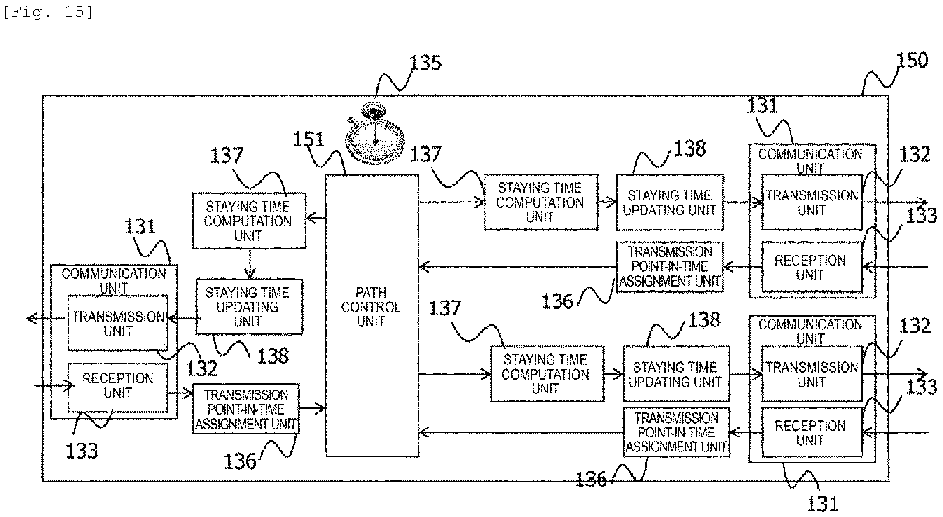

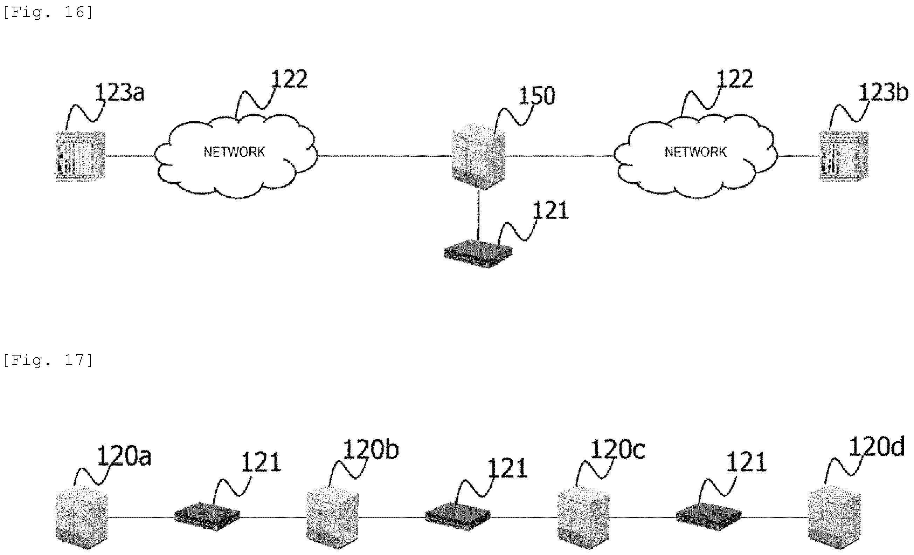

For example, as illustrated in Fig. 15, in a case where three communication ports are provided, with the configuration as illustrated in Fig. 16, the communication delay in the network relay device 121 can be obtained. More precisely, three ports that are illustrated in Fig. 15 are connected to the communication device 123a, the communication device 123b, the network relay device 121, respectively, and thus an influence due to the communication delay in the network relay device 121 can be excluded.

(Effects)

With the configuration described above, the time for which the packet stays within the communication device can be calculated. Therefore, in a case where the communication control device 150 is used as a TC switch that complies with IEEE 1588, or where the communication control device 150 itself is synchronized to a different communication device 123, even though a communication flow other than the synchronization packet is present and there is a change in the time for reception processing of the synchronization packet, the synchronization can be performed.

Furthermore, if a network is established as illustrated in Fig. 16, even though a general-purpose network relay device that does not support a point-in-time function is used, the communication delay can be measured and thus the communication device 123 can be synchronized with high precision.

Third Embodiment

A third embodiment has a configuration in which the communication control devices 120a and 120b are hierarchically arranged. Unless otherwise specified, a reference character that is used in the embodiment means that a function, an element, or the like is the same as that which is described in the first embodiment and the second embodiment.

A configuration example of the system is illustrated in Fig. 17.

The present embodiment assumes that communication control devices 120a and 120d, and communication control devices 120b and 120c are synchronized. When each communication control device performs the operations in Figs. 4 and 5, because the communication delay between the communication control devices 120b and 120c are doubly caused, there is a need to indicate the presence of a hierarchical structure. With this method, information on arrangement of the communication control devices 120 may be in advance configured for each communication control device 120, and information on a position of the communication control device 120 may be notified to the communication control device using a prescribed message. Alternatively, information indicating the number of ranks in the hierarchical structure may be stored in the synchronization packet. In this case, an example in which when an output is generated from the communication control device 120a, + 1 is assigned, in which when an output is generated from the communication control device 120b, + 1 is assigned, in which when an output is generated from the communication control device 120c, -1 is assigned, and in which when an output is generated from the communication control device 120d, -1 is assigned, is given.

Alternatively, in a case where the methods in Figs. 6 (A) and 6(b), with the number of pieces of transmission point-in-time information that are attached, the number of ranks in the hierarchical structure may be determined. In this case, two pieces of transmission point-in-time information that are attached by the communication control device 120a and the communication control device 120b are stored in the packet that is output from the communication control device 120b. Therefore, the communication control device 120c that receives the synchronization packet can determine that, based on the fact that there are two pieces of transmission point-in-time information, the communication control device 120c itself is in a hierarchical position. An example in which, although the communication delay is computed based on a result of the determination, a result of the computation is not reflected in the synchronization packet (in order to prevent the communication delay from being doubly subtracted) is given. In this case, the transmission point-in-time information that is attached by the communication control device 120b may be deleted, or instead of being deleted, may be replaced with a communication delay between the communication control device 120b and the communication control device 120c. In this case, an example in which a type indicating whether the attached information is the transmission point-in-time or is the communication delay is stored in the synchronization packet is given.

The communication control device 120d calculates a communication delay between the communication control devices 120a and 120d along with the transmission point-in-time and the communication delay, which are attached, and causes a result of the calculation to be reflected in the synchronization packet. In this case, the communication delay may be disregarded that is attached by the communication control device 120c.

Alternatively, the synchronization may be performed between the communication control devices 120a and 120b, the communication control devices 120b and 120c, and the communication control devices 120c and 120d (more precisely, between each of all the communication control devices 120), the communication control devices 120b and 120c may attach the communication delay to the synchronization packet, and the communication control device 120d may cause those communication delays and the communication delay between the communication control device 120c and the communication control device 120d to be reflected in the point-in-time information in the synchronization packet.

With the use of the configuration described above, although the communication control device 120 is hierarchically configured, the communication delay in the network relay device 121 can be calculated, the synchronization can be performed between the communication devices 123, and a network system can be flexibly configured.

Furthermore, one or several of, or all of the configuration, function, processing unit, processing means, and the like may be realized in hardware, for example, by performing designing into an integrated circuit, and so on. Furthermore, each of the configurations and the functions, and the like may be realized in software by a processor interpreting and executing a program that realizes each of the functions. Pieces of information on a program, a table, a file, and the like that realize each function can be stored on a recording medium, such as a memory, a hard disk, a Solid State Drive (SSD), or a recording medium, such as an IC card, an SD card, or a DVD.

Reference Signs List

| 101 | CPU |
| 102 | LAN |
| 103 | COMMUNICATION CONTROL UNIT |
| 108 | MEMORY |
| 109 | NONVOLATILE STORAGE MEDIUM |
| 110 | BUS |
| 120, 150 | COMMUNICATION CONTROL DEVICE |
| 121 | NETWORK RELAY DEVICE |
| 122 | NETWORK |
| 123 | COMMUNICATION DEVICE |
| 130 | POINT-IN-TIME SYNCHRONIZATION PROCESSING UNIT |
| 131 | COMMUNICATION UNIT |
| 132 | TRANSMISSION UNIT |
| 133 | RECEPTION UNIT |
| 134 | SYNCHRONIZATION PACKET DETERMINATION UNIT |
| 135 | TIME TRACKING UNIT |
| 136 | TRANSMISSION POINT-IN-TIME ASSIGNMENT UNIT |
| 137 | COMMUNICATION DELAY COMPUTATION UNIT |
| 138 | COMMUNICATION DELAY UPDATING UNIT |
| 140 | PACKET |
| 151 | PATH CONTROL UNIT |
| 160 | IEEE 1588 HEADER |
| 161 | correction Field |
| 162 | origin Time stamp |

**Claims**

1.  A communication system comprising:

    a first communication control device; and
    a second communication control device that makes a connection to the first communication control device through a relay device (121),
    wherein the first and second communication control devices are provided between communication devices that perform point-in-time synchronization using a synchronization packet,
    wherein the first communication control device has a point-in-time assignment unit (136) that assigns first point-in-time information relating to a point in time at which the synchronization packet that is sent from one of the communication devices is received, or a point in time at which the received synchronization packet is transmitted to the relay device, to a packet that is transmitted to the relay device, and

wherein the second communication control device includes

a communication delay computation unit (137) that, for the synchronization packet, obtains information relating to a communication delay between the first and second communication control devices from second point-in-time information relating to a point in time at which the synchronization packet that is sent from the first communication control device through the relay device is received, or a point in time at which the received synchronization packet is transmitted to the other communication device, and from the first point-in-time information that is assigned by the point-in-time assignment unit, and

a communication relay updating unit (138) that assigns the obtained information relating to the communication delay to a packet that is transmitted to the other communication device.

2. The communication system according to claim 1,
wherein the assignment of the first point-in-time information by the point-in-time assignment unit is assignment of the first point-in-time information to the head or the end of the synchronization packet,
wherein the communication delay computation unit adds the second point-in-time information to the first point-in-time information that is attached to the synchronization packet and obtains the information to relating the communication delay, and
wherein the communication delay updating unit removes the first point-in-time information that is attached to the synchronization packet, and stores the information relating to the communication delay within the synchronization packet.

3. The communication system according to claim 1,
wherein an original point-in-time area in which information relating to a point in time at which the one communication device transmits the synchronization packet is stored, and a compensation area in which information relating to a communication delay on a communication path is stored are included in the synchronization packet.

4. The communication system according to claim 3,
wherein the assignment of the first point-in-time information by the point-in-time assignment unit is to subtract the first point-in-time information from a point in time that is indicated in the original point-in-time area or the compensation area and to perform update.

5. The communication system according to claim 3,
wherein the communication delay computation unit adds the second point in time information to a point in time that is indicated in the original point-in-time area or the compensation area and obtains the information relating to the communication delay, and
wherein the assignment of the information relating to the communication delay by the communication delay updating unit is to update the point in time that is indicated in the original point-in-time area or the compensation area, with the information relating to the communication delay.

6. The communication system according to 4,
wherein in subtracting the first point-in-time information, the point-in-time assignment unit indicates whether or not carrying-over, in which a prescribed time is a unit, is performed, using a prescribed area of the synchronization packet.

7. The communication system according to claim 1,
wherein the point-in-time assignment unit assigns the first point-in-time information to a packet that is independent of the synchronization packet.

8. The communication system according to claim 1,
wherein the communication delay updating unit assigns the information relating to the communication delay to a packet that is independent of the synchronization packet.

9. The communication system according to claim 1,
wherein the point-in-time assignment unit adds a value in a prescribed area of the synchronization packet by a prescribed number, based on the first point-in-time information, and
wherein the communication delay computation unit subtracts the value in the prescribed area of the synchronization packet by the prescribed number, based on the second point-in-time information.

10. A communication method that is performed by multiple communication control devices that are provided between communication devices that perform point-in-time synchronization using a synchronization packet, the method comprising:

processing in which a first communication control device assigns a first point-in-time information relating to a point in time at which the synchronization packet that is sent from one of the communication devices is received, or a point in time at which the received synchronization packet is transmitted to a relay device, to a packet that is transmitted to the relay device;

processing in which, for the synchronization packet, the second communication control device obtains information relating to a communication delay between the first and second communication control devices from second point-in-time information relating to a point in time at which the synchronization packet that is sent from the first communication control device through the relay device is received, or a point in time at which the received synchronization packet is transmitted to the other communication device, and from the first point-in-time information that is assigned by the first communication control device; and

processing in which the obtained information relating to the communication delay is assigned to a packet that is transmitted to the other communication device.

11. A communication program for causing the first or second communication control device of claim 1 to perform the communication control method according to claim 10.

**Patentansprüche**

1. Kommunikationssystem, das Folgendes umfasst:

eine erste Kommunikationssteuerungsvorrichtung; und

eine zweite Kommunikationssteuerungsvorrichtung, die eine Verbindung zur ersten Kommunikationssteuerungsvorrichtung über eine Relaisvorrichtung (121) herstellt,

wobei die erste und die zweite Kommunikationssteuerungsvorrichtung zwischen Kommunikationsvorrichtungen bereitgestellt sind, die unter Verwendung eines Synchronisationspakets eine Point-in-time-Synchronisation durchführen,

wobei die erste Kommunikationssteuerungsvorrichtung eine Point-in-time-Zuordnungseinheit (136) aufweist, die erste Point-in-time-Informationen, die einen Zeitpunkt betreffen, an dem das Synchronisationspaket, das von einem der Kommunikationsvorrichtungen gesendet wird, empfangen wird, oder die einen Zeitpunkt betreffen, an dem das empfangene Synchronisationspaket an die Relaisvorrichtung übermittelt wird, einem Paket zuordnet, das an die Relaisvorrichtung übermittelt wird, und

wobei die zweite Kommunikationsteuerungsvorrichtung eine Kommunikationsverzögerungs-Berechnungseinheit (137) umfasst, die für das Synchronisationspaket Informationen betreffend eine Kommunikationsverzögerung zwischen der ersten und der zweiten Kommunikationssteuerungsvorrichtung aus zweiten Point-in-time-Informationen, die einen Zeitpunkt betreffen, an dem das Synchronisationspaket, das von der ersten Kommunikationssteuerungsvorrichtung über die Relaisvorrichtung gesendet wird, empfangen wird, oder die einen Zeitpunkt betreffen, an dem das empfangene Synchronisationspaket an die andere Kommunikationsvorrichtung übermittelt wird, und aus den ersten Point-in-time-Informationen, die durch die Point-in-time-Zuordnungseinheit zugeordnet werden, erhält, und

eine Kommunikationsrelais-Aktualisierungseinheit (138), die die erhaltenen Informationen betreffend die Kommunikationsverzögerung einem Paket zuordnet, das an die andere Kommunikationsvorrichtung übermittelt wird.

2. Kommunikationssystem nach Anspruch 1,

wobei die Zuordnung der ersten Point-in-time-Informationen durch die Point-in-time-Zuordnungseinheit das Zuordnen der ersten Point-in-time-Informationen zum Anfang oder zum Ende des Synchronisationspakets bedeutet,

wobei die Kommunikationsverzögerungs-Berechnungseinheit die zweiten Point-in-time-Informationen zu den ersten Point-in-time-Informationen, die am Synchronisationspaket anhängen, addiert, und Informationen betreffend die Kommunikationsverzögerung erhält, und

wobei die Kommunikationsverzögerungs-Aktualisierungseinheit die ersten Point-in-time-Informationen, die am Synchronisationspaket anhängen, entfernt und die Informationen betreffend die Kommunikationsverzögerung im Synchronisationspaket speichert.

3. Kommunikationssystem nach Anspruch 1, wobei ein ursprünglicher Point-in-time-Bereich, in dem Informationen, die einen Zeitpunkt betreffen, an dem die eine Kommunikationsvorrichtung das Synchronisationspaket übermittelt, gespeichert sind, und ein Kompensationsbereich, in dem Informationen, die eine Kommunikationsverzögerung auf einem Kommunikationspfad betreffen, gespeichert sind, im Synchronisationspaket umfasst sind.

4. Kommunikationssystem nach Anspruch 3, wobei die Zuordnung der ersten Point-in-time-Informationen durch die Point-in-time-Zuordnungseinheit das Subtrahieren der ersten Point-in-time-Informationen von einem Zeitpunkt, der im ursprünglichen Point-in-time-Bereich oder dem Kompensationsbereich angezeigt ist, und das Durchführen einer Aktualisierung bedeutet.

5. Kommunikationssystem nach Anspruch 3, wobei die Kommunikationsverzögerungs-Berechnungseinheit die zweiten Point-in-time-Informationen zu einem Zeitpunkt addiert, der im ursprünglichen Point-in-time-Bereich oder Kompensationsbereich angezeigt ist, und Informationen betreffend die Kommunikationsverzögerung erhält, und wobei das Zuordnen der Informationen betreffend die Kommunikationsverzögerung durch die Kommunikationsverzögerungs-Aktualisierungseinheit das Aktualisieren des Zeitpunkts, der im ursprünglichen Point-in-time-Bereich oder Kompensationsbereich angezeigt ist, mit den Informationen betreffend die Kompensationsverzögerung bedeutet.

6. Kommunikationssystem nach Anspruch 4, wobei beim Subtrahieren der ersten Point-in-time-Informationen, unter Verwendung eines vorgeschriebenen Bereichs des Synchronisationspakets, die Point-in-time-Zuordnungseinheit anzeigt, ob ein Übertrag, bei dem eine vorgeschriebene Zeit eine Einheit darstellt, durchgeführt wird oder nicht.

7. Kommunikationssystem nach Anspruch 1, wobei die Point-in-time-Zuordnungseinheit die ersten Point-in-time-Informationen einem Paket zuordnet, das unabhängig vom Synchronisationspaket ist.

8. Kommunikationssystem nach Anspruch 1, wobei die Kommunikationsverzögerungs-Aktualisierungseinheit die Informationen betreffend die Kommunikationsverzögerung einem Paket zuordnet, das unabhängig vom Synchronisationspaket ist.

9. Kommunikationssystem nach Anspruch 1, wobei die Point-in-time-Zuordnungseinheit einen Wert in einem vorgeschriebenen Bereich des Synchronisationspakets in einer vorgeschriebene Höhe, basierend auf den ersten Point-in-time-Informationen, hinzufügt, und wobei die Kommunikationsverzögerungs-Berechnungseinheit den Wert im vorgeschriebenen Bereich des Synchronisationspakets in der vorgeschriebenen Höhe, basierend auf den zweiten Point-in-time-Informationen, subtrahiert.

10. Kommunikationsverfahren, das von mehreren Kommunikationssteuerungsvorrichtungen durchgeführt wird, die zwischen Kommunikationsvorrichtungen bereitgestellt sind, die eine Point-in-time-Synchronisation unter Verwendung eines Synchronisationspakets durchführen, wobei das Verfahren Folgendes umfasst:

die Verarbeitung, bei der eine erste Kommunikationssteuerungsvorrichtung erste Point-in-time-Informationen, die einen Zeitpunkt betreffen, an dem das Synchronisationspaket, das von einem der Kommunikationsvorrichtungen gesendet wird, empfangen wird, oder die einen Zeitpunkt betreffen, an dem das empfangene Synchronisationspaket an die Relaisvorrichtung übermittelt wird, einem Paket zuordnet, das an die Relaisvorrichtung übermittelt wird, und
die Verarbeitung, bei der die zweite Kommunikationsteuerungsvorrichtung für das Synchronisationspaket Informationen betreffend eine Kommunikationsverzögerung zwischen der ersten und der zweiten Kommunikationssteuerungsvorrichtung von zweiten Point-in-time-Informationen, die einen Zeitpunkt betreffen, an dem das Synchronisationspaket, das von der ersten Kommunikationssteuerungsvorrichtung über die Relaisvorrichtung gesendet wird, empfangen wird, oder die einen Zeitpunkt betreffen, an dem das empfangene Synchronisationspaket an die andere Kommunikationsvorrichtung übermittelt wird, und von der ersten Point-in-time-Information, die durch die Point-in-time-Zuordnungseinheit zugeordnet wird, erhält, und
die Verarbeitung, bei der die erhaltenen Informationen betreffend die Kommunikationsverzögerung einem Paket zuordnet, das an die andere Kommunikationsvorrichtung übermittelt wird.

11. Kommunikationsprogramm, um die erste oder zweite Kommunikationssteuerungsvorrichtung nach Anspruch 1 dazu zu veranlassen, das Kommunikationssteuerungsverfahren nach Anspruch 10 durchzuführen.

**Revendications**

1. Système de communication comprenant :

un premier dispositif de commande de communication ; et

un second dispositif de commande de communication qui établit une connexion avec le premier dispositif de commande de communication par l'intermédiaire d'un dispositif relais (121) ;

dans lequel les premier et second dispositifs de commande de communication sont fournis entre des dispositifs de communication qui mettent en oeuvre une synchronisation ponctuelle en utilisant un paquet de synchronisation ;

dans lequel le premier dispositif de commande de communication présente une unité d'affectation d'informations ponctuelles (136) qui affecte des premières informations ponctuelles connexes à un instant auquel est reçu le paquet de synchronisation qui est envoyé à partir de l'un des dispositifs de communication, ou à un instant auquel le paquet de synchronisation reçu est transmis au dispositif relais, à un paquet qui est transmis au dispositif relais ; et

dans lequel le second dispositif de commande de communication inclut :

une unité de calcul de retard de communication (137) qui, pour le paquet de synchronisation, obtient des informations connexes à un retard de communication entre les premier et second dispositifs de commande de communication, à partir de secondes informations ponctuelles connexes à un instant auquel est reçu le paquet de synchronisation qui est envoyé à partir du premier dispositif de commande de communication, par l'intermédiaire du dispositif relais, ou à un instant auquel le paquet de synchronisation reçu est transmis à l'autre dispositif de communication, et à partir des premières informations ponctuelles qui sont affectées par l'unité d'affectation d'informations ponctuelles ; et

une unité de mise à jour de retard de communication (138) qui affecte les informations obtenues connexes au retard de communication à un paquet qui est transmis à l'autre dispositif de communication.

2. Système de communication selon la revendication 1,
dans lequel l'affectation des premières informations ponctuelles par l'unité d'affectation d'informations ponctuelles correspond à l'affectation des premières informations ponctuelles à la tête ou à la fin du paquet de synchronisation ;
dans lequel l'unité de calcul de retard de communication ajoute les secondes informations ponctuelles aux premières informations ponctuelles qui sont annexées au paquet de synchronisation, et obtient les informations connexes au retard de communication ; et
dans lequel l'unité de mise à jour de retard de communication supprime les premières informations ponctuelles qui sont annexées au paquet de synchronisation, et stocke les informations connexes au retard de communication dans le paquet de synchronisation.

3. Système de communication selon la revendication 1,
dans lequel une zone ponctuelle d'origine dans laquelle sont stockées des informations connexes à un instant auquel ledit un dispositif de communication transmet le paquet de synchronisation, et une zone de compensation dans laquelle sont stockées des informations connexes à un retard de communication sur un chemin de communication, sont incluses dans le paquet de synchronisation.

4. Système de communication selon la revendication 3,
dans lequel l'affectation des premières informations ponctuelles par l'unité d'affectation d'informations ponctuelles consiste à soustraire les premières informations ponctuelles d'un instant qui est indiqué dans la zone ponctuelle d'origine ou dans la zone de compensation, ainsi qu'à mettre en oeuvre la mise à jour.

5. Système de communication selon la revendication 3,
dans lequel l'unité de calcul de retard de communication ajoute les secondes informations ponctuelles à un instant qui est indiqué dans la zone ponctuelle d'origine ou dans la zone de compensation, et obtient les informations connexes au retard de communication ; et
dans lequel l'affectation des informations connexes au retard de communication par l'unité de mise à jour de retard de communication consiste à mettre à jour l'instant qui est indiqué dans la zone ponctuelle d'origine ou dans la zone de compensation, avec les informations connexes au retard de communication.

6. Système de communication selon la revendication 4,
dans lequel, dans le cadre de la soustraction des premières informations ponctuelles, l'unité d'affectation d'informations ponctuelles indique si un report, dans lequel un temps prescrit correspond à une unité, est mis en oeuvre ou non, en utilisant une zone prescrite du paquet de synchronisation.

7. Système de communication selon la revendication 1,

dans lequel l'unité d'affectation d'informations ponctuelles affecte les premières informations ponctuelles à un paquet qui est indépendant du paquet de synchronisation.

8. Système de communication selon la revendication 1,
dans lequel l'unité de mise à jour de retard de communication affecte les informations connexes au retard de communication à un paquet qui est indépendant du paquet de synchronisation.

9. Système de communication selon la revendication 1,
dans lequel l'unité d'affectation d'informations ponctuelles ajoute une valeur dans une zone prescrite du paquet de synchronisation, d'un nombre prescrit, sur la base des premières informations ponctuelles ; et
dans lequel l'unité de calcul de retard de communication soustrait la valeur dans la zone prescrite du paquet de synchronisation, du nombre prescrit, sur la base des secondes informations ponctuelles.

10. Procédé de communication qui est mis en oeuvre par de multiples dispositifs de commande de communication qui sont fournis entre des dispositifs de communication qui mettent en oeuvre une synchronisation ponctuelle en utilisant un paquet de synchronisation, le procédé comprenant :

un traitement dans lequel un premier dispositif de commande de communication affecte des premières informations ponctuelles connexes à un instant auquel est reçu le paquet de synchronisation qui est envoyé à partir de l'un des dispositifs de communication, ou à un instant auquel le paquet de synchronisation reçu est transmis à un dispositif relais, à un paquet qui est transmis au dispositif relais ; et
un traitement dans lequel, pour le paquet de synchronisation, le second dispositif de commande de communication obtient des informations connexes à un retard de communication entre les premier et second dispositifs de commande de communication, à partir de secondes informations ponctuelles connexes à un instant auquel est reçu le paquet de synchronisation qui est envoyé à partir du premier dispositif de commande de communication, par l'intermédiaire du dispositif relais, ou à un instant auquel le paquet de synchronisation reçu est transmis à l'autre dispositif de communication, et à partir des premières informations ponctuelles qui sont affectées par le premier dispositif de commande de communication ; et
un traitement dans lequel les informations obtenues connexes au retard de communication sont affectées à un paquet qui est transmis à l'autre dispositif de communication.

11. Programme de communication destiné à amener le premier dispositif de commande de communication ou le second dispositif de commande de communication selon la revendication 1 à mettre en oeuvre le procédé de commande de communication selon la revendication 10.

[Fig. 1]

[Fig. 2]

CPU 101
MEMORY 108
NONVOLATILE STORAGE MEDIUM 109
BUS 110
120
LAN 102
LAN 102
LAN 102
122
122
122
COMMUNICATION CONTROL UNIT 103

EP 3 163 788 B1

[Fig. 3]

EP 3 163 788 B1

[Fig. 4]

```
                    ┌──────────────┐
                    │    START     │
                    └──────┬───────┘
                           │              ┌─────────────┐
                           ▼              │             │
                    ╱───────────────╲     │             │
                   ╱   IS Sync PACKET ╲   │             │
                  ╱    RECEIVED?    N   ╲──┘             │
                   ╲                   ╱                  ~ S001
                    ╲─────────┬───────╱
                              │ Y
                              ▼
                    ┌──────────────────┐
                    │ ACQUIRE TRANSMISSION │  ~ S002
                    │   POINT IN TIME     │
                    └──────────┬─────────┘
                               │
                               ▼
                    ┌──────────────────┐
                    │ UPDATE TRANSMISSION │  ~ S003
                    │   POINT IN TIME     │
                    └──────────┬─────────┘
                               │
                               ▼
                    ┌──────────────────┐
                    │    TRANSMIT       │  ~ S004
                    │  SYNCHRONIZATION  │
                    │     PACKET        │
                    └──────────┬─────────┘
                               │
                               ▼
                    ┌──────────────┐
                    │     END      │
                    └──────────────┘
```

[Fig. 5]

[Fig. 6]

(a)

| TRANSMISSION POINT-IN-TIME INFORMATION | SYNCHRONIZATION PACKET |
| --- | --- |

(b)

| SYNCHRONIZATION PACKET | TRANSMISSION POINT-IN-TIME INFORMATION |
| --- | --- |

(c)

| POINT-IN-TIME INFORMATION 2 | SYNCHRONIZATION PACKET | POINT-IN-TIME INFORMATION 1 |
| --- | --- | --- |

[Fig. 7]

IEEE 1588 HEADER 160

162

161

| origin Time stamp | | correction Field | |
|---|---|---|---|

[Fig. 8]

(a)

| TS | CF | 140a | 120a | TS | CF | 140b | 121 | 120b | TS | CF | 140c |

3 SECONDS
200 MICROSECONDS

2 SECONDS

3 SECONDS
400 MICROSECONDS

TRANSMISSION
POINT IN TIME
1 SECOND
200 MICROSECONDS

RECEPTION
POINT IN TIME
1 SECOND
400 MICROSECONDS

(b)

| TS | CF | 140d | 120a | TS | CF | 140e | 121 | 120b | TS | CF | 140f |

3 SECONDS
200 MICROSECONDS

-1 SECOND
200 MICROSECONDS

200 MICROSECONDS

TRANSMISSION
POINT IN TIME
1 SECOND
200 MICROSECONDS

RECEPTION
POINT IN TIME
1 SECOND
400 MICROSECONDS

(c)

| TS | CF | 140g | 120a | TS | CF | 140h | 121 | 120b | TS | CF | 140i |

3 SECONDS
200 MICROSECONDS

2 SECONDS
-200 MICROSECONDS

200 MICROSECONDS

TRANSMISSION
POINT IN TIME
1 SECOND
200 MICROSECONDS

RECEPTION
POINT IN TIME
1 SECOND
400 MICROSECONDS

[Fig. 9]

(a)

140d 120a 140e 121 120b 140f

TS CF — TS CF — — TS CF

3 SECONDS
200 MICROSECONDS

TRANSMISSION
POINT IN TIME
1 SECOND
999 MILLISECONDS
800 MICROSECONDS

2 SECONDS
-999 MILLISECONDS
600 MICROSECONDS

RECEPTION
POINT IN TIME
2 SECONDS
200 MICROSECONDS

4 SECONDS
-999 MILLISECONDS
400 MICROSECONDS

(b)

140d 120a 140e 121 120b 140f

TS CF — TS CF — — TS CF

3 SECONDS
200 MICROSECONDS

TRANSMISSION
POINT IN TIME
1 SECOND
999 MILLISECONDS
800 MICROSECONDS

2 SECONDS
-999 MILLISECONDS
600 MICROSECONDS

RECEPTION
POINT IN TIME
2 SECONDS
200 MICROSECONDS

3 SECONDS
600 MICROSECONDS

EP 3 163 788 B1

[Fig. 10]

[Fig. 11]

120b

121

123

120a

[Fig. 12]

START

S060 — MASTER TRANSMITS Sync MESSAGE TO SLAVE

S061 — MATER STORES POINT IN TIME AT WHICH Sync MESSAGE IS TRANSMITTED

S062 — SLAVE RECORDS POINT IN TIME AT WHICH Sync MESSAGE IS RECEIVED

S063 — MASTER NOTIFIES SLAVE OF POINT IN TIME AT WHICH Sync MESSAGE IS TRANSMITTED

S064 — SLAVE TRANSMITS Delay_Req MESSAGE TO MASTER

S065 — SLAVE RECORDS POINT IN TIME AT WHICH Delay_Req MESSAGE IS TRANSMITTED

S066 — MASTER RECEIVES Delay_Req MESSAGE, AND RECORDS RECEPTION POINT IN TIME

S067 — MASTER NOTIFIES SLAVE OF POINT IN TIME AT WHICH Delay_Req MESSAGE IS RECEIVED, IN STATE OF BEING CARRIED ON Delay_Resp MESSAGE

S068 — SLAVE COMPUTES COMMUNICATION DELAY AND DIFFERENCE IN POINT IN TIME

END

[Fig. 13]

[Fig. 14]

EP 3 163 788 B1

[Fig. 15]

EP 3 163 788 B1

[Fig. 16]

123a    122    NETWORK    150    122    NETWORK    123b

121

[Fig. 17]

120a    121    120b    121    120c    121    120d

EP 3 163 788 B1

[Fig. 18]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010062729 A
- EP 2159942 A2

- JP 2014078781 A

**Non-patent literature cited in the description**

- IEEE Standard for a Precision Clock Synchronization Protocol for Networked Measurement and Control Systems. *IEEE 1588-2008*